# EUROPEAN PATENT SPECIFICATION

(11) **EP 1 442 568 B1**
(45) Date of publication and mention of the grant of the patent: **25.02.2009**
(21) Application number: 02774807.8
(22) Date of filing: 07.11.2002
(51) Int. Cl.: H04L 12/66, H04L 12/28, H04W 48/00, H04M 17/00

(54) **PROVIDING WIRELESS DATA SERVICES VIA PUBLIC TELEPHONES**
BEREITSTELLEN DRAHTLOSER DATENDIENSTE ÜBER ÖFFENTLICHE FERNSPRECHER
FOURNITURE DE SERVICES DE TRANSMISSION DE DONNEES SANS FIL PAR L'INTERMEDAIRE DE TELEPHONES PUBLICS

(30) Priority: 07.11.2001 FI 20012153
(43) Date of publication of application: 04.08.2004
(73) Proprietor: TeliaSonera Finland Oyj, 00510 Helsinki (FI)
(72) Inventor: KÄMÄRI, Jukka, FIN-01450 Vantaa (FI); SUTINEN, Pasi, FIN-59310 Särkisalmi (FI); PÄTYNEN, Markku, FIN-01480 Vantaa (FI); TAPIOLA, Juhani, FIN-15880 Hollola (FI); KOSKELAINEN, Timo, FIN-54270 Vainikkala (FI)
(74) Representative: Virkkala, Jukka Antero
(86) International application number: PCT/FI2002/000867
(87) International publication number: WO 2003/041348

(56) References cited:
- EP-A1- 0 449 119
- WO-A1-98/11710
- US-A1- 2002 061 013

## Description

### BACKGROUND OF THE INVENTION

The invention relates to methods and equipment for offering wireless data services to wireless terminals, whose subscribers are outside of their home networks or who do not have a home network.

Wireless networks have been proposed as a solution to improve the mobility of data processing equipment. For example, WLAN (Wireless Local Area Networks) networks can be used to establish a data connection to a portable or handheld computer.

A general problem with most wireless data connection techniques is that subscribers are only supported within their home network, that is, within the coverage area of their home network operator. A partial solution to this problem is disclosed in EP 0 449 119 B1 by Risaburo Sato et al. ("Sato"). Sato discloses the use of public telephones to support subscribers outside their home networks.

At first sight, the Sato et al. technique seems to solve the problem in an elegant manner. Persons away from their homes can use public telephones. In an analogue manner, data users away from home could be supported via public telephones provided with a data.connection. This analogy is not perfect, however, because the typical use of data connections is very different from how public telephones are typically used. The duration of a typical data connection is much longer than the duration of a typical voice call. Even if a user would be willing to pay for a long data connection, it is socially unacceptable to reserve public telephones for extended periods of time. In other words, a specific problem of the Sato et al. technique is that the billing remains an open question. While the Sato et al. patent suggests that multiple users may share a data connection (by means of time compression multiplexing or frequency division multiplexing), there is no actual disclosure as to how the multiple users are billed.

WO 98/11710 discloses a cordless telephone with a creditor debit card acceptor which enables billing via the credit card.

### BRIEF DESCRIPTION OF THE INVENTION

An object of the present invention is to provide a method and an apparatus for implementing the method so as to solve the above problem. In other words, the object of the invention is to offer wireless data services to subscribers outside their home networks. The objects of the invention are achieved by a method and an arrangement which are characterized by what is stated in the independent claims. The preferred embodiments of the invention are disclosed in the dependent claims.

An aspect of the invention is an arrangement for providing a wireless data service from a service provider to a wireless terminal. The service provider is operationally coupled to a data network. The arrangement comprises a conventional public telephone having a circuit-switched connection to an exchange. The arrangement further comprises a filter having a circuit-switched port, a packet-switched port and a common port. The common port is used to provide a common data path between the public telephone and the common port of the filter. The term "common data path" means a data path that conveys circuit-switched services and packet-switched services. Circuit-switched services are used to convey conventional speech connections to/from the public telephone via the exchange. Packet-switched services are used to convey the data services between the data network and the wireless terminal.

To support wireless communication, the arrangement comprises wireless communication means operationally coupled to the common port of the filter via the common data path. The wireless communication means can be implemented as an Asynchronous Digital Subscriber Line (ADSL) terminal that is connected to a Wireless Local Area Network (WLAN) base station.

For billing/debiting purposes, the arrangement comprises debiting means for debiting a user of the wireless terminal for the use of the wireless data service. The debiting means may utilize the public telephone's existing payment techniques, such as a smart card or coin reader, for example. Alternatively, the debiting may be based on a short message that the wireless terminal user sends to a number received for debiting purposes.

Another aspect of the invention is a method for providing a wireless data service from a service provider to a wireless terminal.

The invention relies on public telephones and a part of their existing wiring to convey data services to mobile subscribers. Unlike the Sato et al. technique, the present invention is based on the idea of providing public telephones with packet-switched connections. The use of packet-switched connections has several advantages. For example, each user can be debited on the basis of the amount of transferred data, or the purchased right to transfer a given amount of data. The ability to purchase a right to transfer a given amount of data makes it possible to pay for the connection in advance, whereby the connection can be paid for by means of a short message, for example, or by inserting coins to the public telephone. Alternatively, a telephone card (a smart card) can be inserted into the card reader of the public telephone, the card is debited, after which the card can be withdrawn and another user may use the same public telephone for voice or data connections, while the first user is using their data connection. This is a definite advantage over the prior art public telephones in which a smart card must be inserted in a card slot for the entire duration of a call.

### BRIEF DESCRIPTION OF THE DRAWINGS

In the following the invention will be described in greater detail by means of preferred embodiments with reference to the attached drawings, in which
Figure 1 is a block diagram illustrating an embodiment of the invention;
Figure 2 is a flow chart illustrating the debiting according to a preferred embodiment of the invention; and
Figure 3 is a signalling diagram illustrating a typical set of events in a system according to an embodiment of the invention.

### DETAILED DESCRIPTION OF THE INVENTION

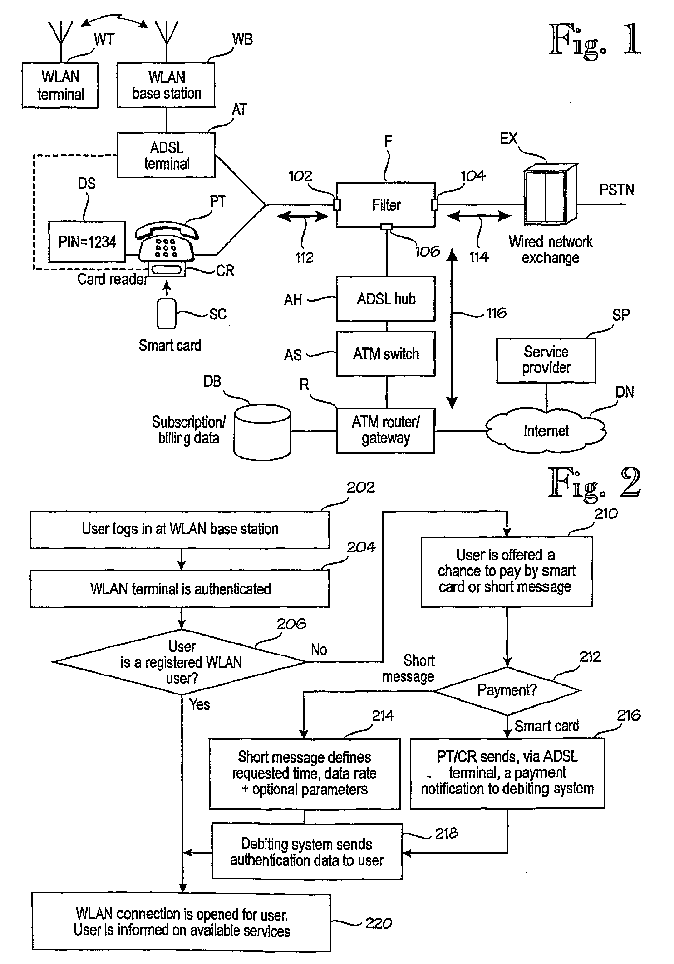

Figure 1 is a block diagram illustrating an embodiment of the invention. As is well known, a public telephone PT is normally connected to a wired network exchange EX. Voice calls are conveyed via a circuit-switched data path 114 between the public telephone PT and the exchange EX. In this example, the public telephone PT comprises (or is connected with) means for accepting payment, such as a card reader CR for accepting smart cards SC. Alternatively, cash payment can be used. In addition, the public telephone PT comprises a display DS. The display is normally used for showing the available call time or tariff to a user, but in some embodiments of this invention, the display is also used to display authentication data to wireless terminal users. If the telephone PT does not have a display, authentication data can be indicated orally, by means of a voice synthesizer (not shown separately).

To support wireless data services, wireless communication means are connected in parallel with the public telephone PT. In the embodiment shown in Figure 1, the wireless communication means comprise an ADSL terminal AT and one or more WLAN base stations WB.

According to the invention, a filter F separates the circuit-switched data path 114 from a packet-switched data path 116 leading to/from a data network DN, to which the service provider SP is operationally connected. The filter F has a common port 102 for forming a common data path 112 to/from the public telephone PT. The filter also has a circuit-switched port 104 for the circuit-switched data path 114 to/from the exchange EX. It also has a packet-switched port 106 for the packet-switched data path 116 to/from the data network DN. Thus the public telephone PT and the wireless communication means AT, WB share a common data path 112 to the filter F, but the filter separates circuit-switched services to the circuit-switched port 104/data path 114 and packet-switched data services to the packet-switched port 106/data path 116.

Because the arrangement shown in Figure 1 will be used in connection with a public telephone, the filter F is somewhat different from the filters used in conventional ADSL installations. Basically, a suitable filter consists of a low-pass filter for the circuit-switched data path 114 and a high-pass filter for the packet-switched data path 116. But in conventional ADSL installations the cut-off frequency may be as low as 3 to 4 kHz, because such an upper frequency is sufficient for normal voice calls. In public telephony applications, however, a filter designed for homes or offices cannot be used, because it would block the debiting pulses that are conveyed at a frequency much higher than a normal filter's cut-off frequency of 3 to 4 kHz. While the debiting pulses are not necessary for the data services according to the invention, they are necessary to enable the use of the public telephone PT for voice calls (or more particularly: to enable debiting a user's smart card). Accordingly, the filter F according to the invention must have a cut-off frequency of approximately 16 to 30 kHz, such that a frequency band below the cut-off frequency is used for the circuit-switched data path (voice calls) and higher frequencies (up to several megahertz) are used for the packet-switched data path 116.

In the embodiment shown in Figure 1, the packet-switched data path 116 comprises an ADSL hub AH, and ATM (Asynchronous Transfer Mode) Switch AS and an ATM Router/Gateway R. The ADSL hub AH is one end of an ADSL connection with the wireless communication means, the other being the ADSL terminal AT in parallel to the public telephone PT. The ATM switch AS establishes ATM connections toward the data network DN. For the purposes of this invention the elements AH and AS are largely transparent, and any suitable technology can be used.

As far as the present invention is concerned, the router/gateway R has two primary functions. It routes the wireless terminal user's data packets via the data network DN to/from the service provider SP. It also participates in debiting by measuring (monitoring) the amount of data transferred to/from the user. A database DB contains debit/credit information related to users. Thus the debiting functions of the router R and the database DB are collectively referred to as a debiting system. The idea of the debiting system is to accept a payment from a user before granting data services to that user, and then set up a user-specific credit balance. The credit balance is reduced as the user uses data services, and when the credit is used up, the data services are discontinued. For example, assume that a user pays for a 10-megabyte session with their smart card SC. The system shown in Figure 1 needs no prior information on the user. When the user inserts their smart card SC and pays for a 10-megabyte session, the debiting system debits the corresponding amount from the user's smart card and assigns an identifier to that session. The session identifier and the remaining credit is stored in the database DB. As the session proceeds and data is transferred, the credit is reduced. When the credit is used up, the session is terminated (but preferably, the user is sent a prior warning).

Figure 2 is a flow chart illustrating the debiting logic according to a preferred embodiment of the invention. In step 202, a user logs in at the WLAN base station. In step 204, the user's terminal is authenticated. In step 206, the debiting system checks whether the user is a registered WLAN user. If yes, a WLAN connection is opened for the user in step 220, and the user is informed on the available services. If the user is not a registered WLAN user, the user is informed about the available payment options in step 210. In this example, the available payment options include payment by smart card or short message. In step 212, the user's payment choice is evaluated. If the user chose payment by short message, they may be informed about the applicable rates and numbers to which the short message can be sent. In step 214, the user sends a short message the price of which will be added to the user's telephone bill. The short message may have a fixed (default) price or, optionally, the user may specify debiting parameters, such as amount of data, data rate, quality of service, duration of session, etc., if such parameters are used as basis for debiting. If, on the other hand, the user chooses payment by smart card, in step 216 the public telephone sends a notification of card debiting via the ADSL terminal AT to the debiting system R/DB. In step 218, debiting system R/DB system sends authentication data (such as a pin-type code) to the user. In step 220, the user must use this pin code to activate a data session.

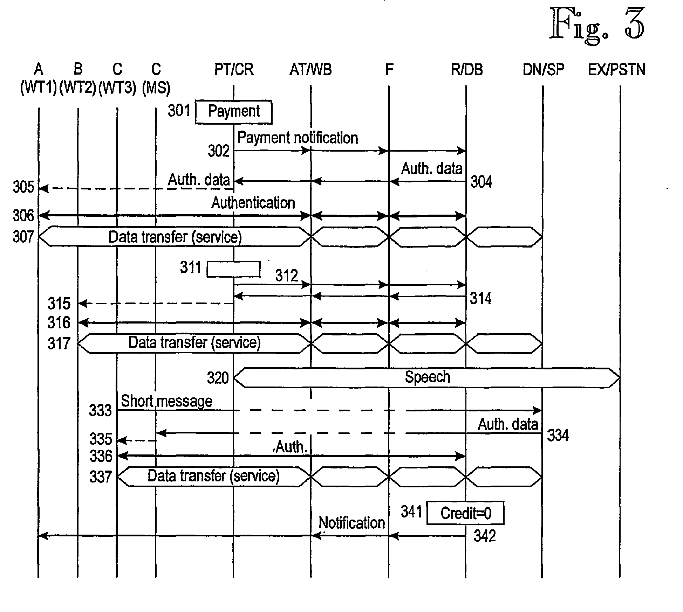

Figure 3 is a signalling diagram illustrating a typical set of events in a system according to an embodiment of the invention. This scenario involves three wireless terminal users plus an additional user, who uses the public telephone for a normal voice call. The three wireless terminal users are denoted by letters A, B and C, and they use wireless terminals WT1 through WT3, respectively.

In step 301, user A pays for a connection by means of the card reader CR at the public telephone PT. Instead of the card reader, payment by cash could be used. Basically, the connection of a card or cash reader with a public telephone is well known to persons skilled in telephony applications. However, the invention proposes a new method of payment, namely a completely prepaid connection. In conventional public telephony applications, even if a user uses a prepaid telephone card, that card is kept in the card reader for the entire duration of a call, which means that the card reader (and the public telephone and the wireless data services) cannot be used by more than one person at a time. According to a preferred embodiment of the invention, the data service is completely prepaid, which means that after payment, the card can be removed from the card reader. Thus several persons can share the packet-switched data path, each simultaneous user paying only for their own connection. This means that the card reader should be smart enough to advice the user on the applicable tariffs and services such that a user can pay in advance for an appropriate session, such as a 10-megabyte session with a given quality of service.

In step 302, after receiving payment from user A, the card reader CR sends a notification of the payment to the debiting system, which in practice is installed in the router R and the database DB. Because the ADSL terminal AT is equipped to convey data messages to/from the debiting system R/DB, the card reader CR sends the payment notification via the AT. The AT sends this notification in a frequency band that lies above the speech band, and the filter F directs the payment notification via the data path 116 to the debiting system R/DB. In step 304, the debiting system R/DB does three things. It stores, in the database DB, the fact that a given user has a given amount of prepaid credit. It also allocates authentication data, such as a pin code, to that user. Finally, it sends the authentication data to the public telephone PT that shows it on its display DS. In step 305, which is shown with a dashed line, user A copies the pin code to his terminal WT1. In step 306, user A initiates authentication with the debiting system R/DB. The debiting system R/DB accepts the authentication if it receives a pin code that matches a pin code with valid credit in the data base DB. In step 307, the debiting system R/DB opens a data connection to the data network DN and the service provider SP. After this, the router R acts as a conventional router apart from the fact that it also monitors the amount of traffic to/from user A's terminal WT1, and deducts this user's credit on the basis of the amount of traffic. The traffic amount can be monitored by counting the data packets to/from the user's terminal.

At this point of time, user A has an ongoing session with the service provider SP, but the public telephone's card reader CR is available. In steps 311 through 317, another user B initiates her data session involving wireless terminal WT2. Steps 311 through 317 correspond to steps 301 through 307, respectively, and will not be described again. For simplicity, the Figures only show one service provider SP, but actually each user may use a different service provider, and each user may use multiple service providers. In this respect, Figure 3 is greatly simplified because anything that is beyond the R/DB from the users' point of view can be entirely conventional (Internet/intranet/extranet servers, online banking, etc.)

At this point, users A and B each have an ongoing session with their respective service providers SP, and the public telephone's card reader CR is still available. In step 320, an additional user begins to use the public telephone PT for a conventional voice call. The voice call takes place in a voice band, and the filter F directs it to the exchange EX (which routes it to the public switched telephone network PSTN).

Users A and B still have ongoing data sessions, and a conventional telephone user is having a voice call. The voice call has the consequence that the public telephone's card reader CR is occupied. According to another preferred embodiment of the invention, the debiting system R/DB also accepts payments in the form of a short message sent from a user's mobile station to a chargeable number. Thus the payment is prepaid from the point of view of the public telephone operator because the public telephone operator trusts the mobile network operator of the user sending the chargeable short message. Accordingly, in step 333, user C sends a short message to a number allocated for the purpose of effecting payments for data services. The short message may indicate charging parameters such as amount of data, quality of service and the like. Figure 3 is again somewhat simplified in the sense that the short message is not actually sent to the debiting system R/DB but via a short message service centre and a server (not shown separately), and the server sends a notification to the debiting system. In step 334, the debiting system sends authentication data (a pin code or the like) as a short message to the mobile station MS of user C. The messages 333 and 334 are partially shown with dashed lines because some of the intervening network elements have been omitted for clarity. Steps 336 (authentication) and 337 (data session) are technically identical to the already explained steps 306 and 307.

In step 341, the debiting system R/DB, having monitored the amount of traffic to/from user A, detects that this user's credit is used up. In step 342, the debiting system R/DB sends a notification to user A's terminal WT1. In a simple embodiment, the notification merely notifies the user that the connection has been terminated. In a more user-friendly implementation, the user may be given a chance to pay more before the termination of the session. But even though the router R disconnects data service, the overlaying protocol layers in the terminal WT1 and the service provider SP may be able to continue a session if user A has to re-authenticate with the debiting system R/DB. In yet another preferred implementation, the debiting system R/DB may cache recently-used authentication data, which means that a user is given a chance to continue a session with the same service provider, if that user's previous session was disconnected because the credit was used up.

It will be apparent to a person skilled in the art that, as technology advances, the inventive concept can be implemented in various ways. The invention and its embodiments are not limited to the examples described above but may vary within the scope of the claims.

## Claims

1. An arrangement for providing a wireless data service from a service provider (SP) to a wireless terminal (WT), the service provider (SP) being operationally coupled to a data network (DN);
the arrangement comprising a public telephone (PT) having a circuit-switched connection with an exchange (EX);
**characterized by**
a filter (F) having a circuit-switched port (104), a packet-switched port (106) and a common port (102);
a packet-switched data path (116) between the data network (DN) and the packet-switched port (106) of the filter;
a circuit-switched data path (114) between the exchange (EX) and the circuit-switched port (104) of the filter;
a common data path (112) between the public telephone (PT) and the common port (102) of the filter;
wireless communication means (WB, AT) operationally coupled to the common port (102) of the filter via the common data path (112), for conveying the wireless data service to the wireless terminal (WT); and
debiting means (R, DB) for debiting a user of the wireless terminal for the use of the wireless data service;
wherein the debiting means are operatively coupled to the packet-switched data path (116) so as to measure the amount of data transferred to/from the wireless terminal (WT).

2. An arrangement according to claim 1, **characterized in that** the wireless communication means comprise a Wireless Local Area Network base station (WB).

3. An arrangement according to claim 1, **characterized in that** the wireless communication means comprise a Bluetooth transceiver.

4. An arrangement according to claim 1 or 2, **characterized in that** the packet-switched data path (116) comprises an Asynchronous Digital Subscriber Line data path (AH).

5. An arrangement according to claim 4, **characterized in that** the debiting means are operable to establish a user-specific credit in response to accepting a payment from the user before providing the wireless data service.

6. An arrangement according to claim 5, **characterized in that** the debiting means (R, DB) are operable to monitor the amount of data transferred to/from the wireless terminal and use the amount as a basis for reducing the user-specific credit.

7. An arrangement according to claim 5 or 6, **characterized in that** the debiting means (R, DB) are operable to accept the payment in response to receiving a notification of a user-sent short message.

8. An arrangement according to claim 5 or 6, **characterized in that** the debiting means (R, DB) are operable to accept the payment in response to receiving a notification originating from a payment collector (CR) connected to the public telephone.

9. A method for providing a wireless data service from a service provider (SP) to a wireless terminal (WT), the service provider (SP) being operationally coupled to a data network (DN);
the method comprising the steps of:
operationally connecting a public telephone (PT) via a circuit-switched connection to an exchange (EX);
**characterized by**
forming, by a filter (F) between the public telephone (PT) and the exchange (EX), a circuit-switched data path (114) to/from the exchange (EX); a packet-switched data path (116) to/from the data network (DN) and a common data path (112) to/from the public telephone (PT);
operationally coupling wireless communication means (WB, AT) to the filter via the common data path (112), for conveying the wireless data service to the wireless terminal (WT); and
in response to accepting a payment by a debiting means (R, DB) operatively coupled to the packet-switched data path (116), enabling the use of the wireless communication means (WB, AT) and the packet-switched data path (116) ; and
measuring, by the debiting means, the amount of data transferred to/from the wireless terminal (WT).

## Patentansprüche

1. Anordnung zum Anbieten eines drahtlosen Datendiensts von einem Dienstanbieter (SP) zu einem drahtlosen Endgerät (WT), wobei der Dienstanbieter (SP) betrieblich mit einem Datennetz (DN) gekoppelt ist;
wobei die Anordnung ein öffentliches Telefon (PT) aufweist, das eine leitungsvermittelte Verbindung mit einer Vermittlungsstelle (EX) aufweist;
**gekennzeichnet durch**
ein Filter (F), das einen leitungsvermittelten Anschluss (104), einen paketvermittelten Anschluss (106) und einen gemeinsamen Anschluss (102) aufweist;
einen paketvermittelten Datenweg (116) zwischen dem Datennetz (DN) und dem paketvermittelten Anschluss (106) des Filters;
einen leitungsvermittelten Datenweg (114) zwischen der Vermittlungsstelle (EX) und dem leitungsvermittelten Anschluss (104) des Filters;
einen gemeinsamen Datenweg (112) zwischen dem öffentlichen Telefon (PT) und dem gemeinsamen Anschluss (102) des Filters;
eine drahtlose Kommunikationseinrichtung (WB, AT), die über den gemeinsamen Datenweg (112) betrieblich mit dem gemeinsamen Anschluss (102) des Filters gekoppelt ist, zum Übermitteln des drahtlosen Datendiensts zu dem drahtlosen Endgerät (WT); und
eine Verrechnungseinrichtung (R, DB) zum Verrechnen der Verwendung des drahtlosen Datendiensts mit einem Nutzer des drahtlosen Endgeräts;
wobei die Verrechnungseinrichtung betrieblich mit dem paketvermittelten Datenweg (116) gekoppelt ist, um die Datenmenge zu messen, die zu/von dem drahtlosen Endgerät (WT) übertragen wird.

2. Anordnung nach Anspruch 1, **dadurch gekennzeichnet, dass** die drahtlose Kommunikationseinrichtung eine Basisstation (WB) eines drahtlosen lokalen Netzes aufweist.

3. Anordnung nach Anspruch 1, **dadurch gekennzeichnet, dass** die drahtlose Kommunikationseinrichtung einen Bluethooth-Sender/Empfänger aufweist.

4. Anordnung nach Anspruch 1 oder 2, **dadurch gekennzeichnet, dass** der paketvermittelte Datenweg (116) einen Datenweg (AH) eines asynchronen digitalen Teilnehmeranschlusses aufweist.

5. Anordnung nach Anspruch 4, **dadurch gekennzeichnet, dass** die Verrechnungseinrichtung arbeitet, um ein Nutzer spezifisches Guthaben als Reaktion auf ein Annehmen einer Zahlung von dem Nutzer vor einem Anbieten des drahtlosen Datendiensts zu bilden.

6. Anordnung nach Anspruch 5, **dadurch gekennzeichnet, dass** die Verrechnungseinrichtung (R, DB) arbeitet, um die Datenmenge zu überwachen, die zu/von dem drahtlosen Endgerät übertragen wird, und die Menge als eine Grundlage zum Verringern des Nutzer spezifischen Guthabens zu verwenden.

7. Anordnung nach Anspruch 5 oder 6, **dadurch gekennzeichnet, dass** die Verrechnungseinrichtung (R, DB) arbeitet, um die Zahlung als Reaktion auf ein Empfangen einer Unterrichtung einer von dem Nutzer gesendeten Kurznachricht anzunehmen.

8. Anordnung nach Anspruch 5 oder 5, **dadurch gekennzeichnet, dass** die Verrechnungseinrichtung (R, DB) arbeitet, um die Zahlung als Reaktion auf ein Empfangen einer Unterrichtung anzunehmen, die von einem Zahlungssammler (CR) veranlasst wird, der mit dem öffentlichen Telefon verbunden ist.

9. Verfahren zum Anbieten eines drahtlosen Datendiensts von einem Dienstanbieter (SP) zu einem drahtlosen Endgerät (WT), wobei der Dienstanbieter (SP) betrieblich mit einem Datennetz (DN) gekoppelt ist;
wobei das Verfahren die Schritte aufweist:
betriebliches Verbinden eines öffentlichen Telefons (PT) über eine leitungsvermittelte Verbindung mit einer Vermittlungsstelle (EX);
**gekennzeichnet durch**
Ausbilden eines leitungsvermittelten Datenwegs (104) zu/von einer Vermittlungsstelle (EX), eines paketvermittelten Datenwegs (106) zu/von dem Datennetz (DN) und eines gemeinsamen Datenwegs (102) zu/von dem öffentlichen Telefon (PT) **durch** ein Filter (F) zwischen dem öffentlichen Telefon (PT) und der Vermittlungsstelle (EX);
betriebliches Koppeln einer drahtlosen Kommunikationseinrichtung (WB, AT) über den gemeinsamen Datenweg (112) mit dem Filter, zum Übermitteln des drahtlosen Datendiensts zu dem drahtlosen Endgerät (WT); und
Zulassen, die drahtlose Kommunikationseinrichtung (WB, AT) und den paketvermittelten Datenweg (116) zu verwenden, als Reaktion auf ein Annehmen einer Zahlung **durch** eine Verrechnungseinrichtung (R, DB), die betrieblich mit dem paketvermittelten Datenweg (116) gekoppelt ist; und
Messen der Datenmenge, die zu/von dem drahtlosen Endgerät (WT) übertragen wird, **durch** die Verrechnungseinrichtung.

## Revendications

1. Système pour fournir un service de données sans fil d'un fournisseur de services (SP) à un terminal sans fil (WT), le fournisseur de services (SP) étant couplé en service à un réseau de données (DN) ;
l'aménagement comprenant un téléphone public (PT) ayant une connexion à commutation de circuits avec un central téléphonique (EX) ;
**caractérisé par**
un filtre (F) ayant un port à commutation de circuits (104), un port à commutation de paquets (106) et un port commun (102) ;
un chemin de données à commutation de paquets (116) entre le réseau de données (DN) et le port à commutation de paquets (106) du filtre ;
un chemin de données à commutation de circuits (114) entre le central téléphonique (EX) et le port à commutation de circuits (104) du filtre ;
un chemin de données commun (112) entre le téléphone public (PT) et le port commun (102) du filtre ;
des moyens de communication sans fil (WB, AT) couplés en service au port commun (102) du filtre via le chemin de données commun (112), pour acheminer le service de données sans fil au terminal sans fil (WT) ; et
des moyens de débit (R, DB) pour débiter un utilisateur du terminal sans fil pour l'utilisation du service de données sans fil ;
dans lequel les moyens de débit sont couplés en service au chemin de données à commutation de circuits (116) de manière à mesurer la quantité de données transférées au terminal sans fil ou depuis celui-ci (WT).

2. Système selon la revendication 1, **caractérisé en ce que** les moyens de communication sans fil comprennent un poste de base de réseau local sans fil (WB).

3. Système selon la revendication 1, **caractérisé en ce que** les moyens de communication sans fil comprennent un émetteur-récepteur Bluetooth.

4. Système selon la revendication 1 ou 2, **caractérisé en ce que** le chemin de données à commutation de paquets (116) comprend un chemin de données de ligne d'abonné numérique asynchrone (AH).

5. Système selon la revendication 4, **caractérisé en ce que** les moyens de débit servent à établir un crédit spécifique à un utilisateur en réponse à l'acceptation d'un paiement de la part de l'utilisateur avant de fournir le service de données sans fil.

6. Système selon la revendication 5, **caractérisé en ce que** les moyens de débit (R, DB) sont aptes à surveiller la quantité de données transférées au terminal sans fil ou depuis celui-ci et à utiliser la quantité comme base pour réduire le crédit spécifique à l'utilisateur.

7. Système selon la revendication 5 ou 6, **caractérisé en ce que** les moyens de débit (R, DB) sont aptes à accepter le paiement en réponse à la réception d'une notification d'un message court envoyé par un utilisateur.

8. Système selon la revendication 5 ou 6, **caractérisé en ce que** les moyens de débit (R, DB) sont aptes à accepter le paiement en réponse à la réception d'une notification provenant d'un collecteur de paiements (CR) raccordé au téléphone public.

9. Procédé pour fournir un service de données sans fil d'un fournisseur de services (SP) à un terminal sans fil (WT), le fournisseur de services (SP) étant couplé en service à un réseau de données (DN) ;
le procédé comprenant les étapes consistant à :
raccorder en service un téléphone public (PT) via une connexion à commutation de circuits à un central téléphonique (EX) ;
**caractérisé par** les étapes consistant à
former, par un filtre (F) disposé entre le téléphone public (PT) et le central téléphonique (EX), un chemin de données à commutation de circuits (114) vers le central téléphonique (EX) ou depuis celui-ci ; un chemin de données à commutation de paquets (116) vers le réseau de données (DN) ou depuis celui-ci et un chemin de données commun (112) vers le téléphone public (PT) ou depuis celui-ci ;
coupler en service les moyens de communication sans fil (WB, AT) au filtre via le chemin de données commun (112) pour acheminer le service de données sans fil au terminal sans fil (WT) ; et,
en réponse à l'acceptation d'un paiement par des moyens de débit (R, DB) couplés en service au chemin de données à commutation de paquets (116), permettre d'utiliser les moyens de communication sans fil (WB, AT) et le chemin de données à commutation de paquets (116) ; et
mesurer, par les moyens de débit, la quantité de données transférée au terminal sans fil (WT) ou depuis celui-ci.
